# EUROPEAN PATENT SPECIFICATION

(11) **EP 3 741 730 B1**
(45) Date of publication and mention of the grant of the patent: **11.06.2025**
(21) Application number: 18901131.5
(22) Date of filing: 18.01.2018
(51) Int. Cl.: C03B 23/02, C03B 23/025, C03B 35/16

(54) **PRODUCTION METHOD FOR SINGLE CURVED TEMPERED GLASS**
VERFAHREN ZUR HERSTELLUNG VON EINZELNEN GEBOGENEN HARTGLASSCHEIBEN
PROCÉDÉ DE PRODUCTION POUR VERRE TREMPÉ À SIMPLE COURBURE

(43) Date of publication of application: 25.11.2020
(73) Proprietor: Luoyang Northglass Technology Co. Ltd, Luoyang, Henan 471000 (CN)
(72) Inventor: HAN, Jun-Feng, Luoyang, Henan 471000 (CN)
(74) Representative: Michalski Hüttermann & Partner Patentanwälte mbB
(86) International application number: PCT/CN2018/000021
(87) International publication number: WO 2019/140540

(56) References cited:
- WO-A1-2004/018372
- CN-A- 1 198 726
- CN-A- 1 525 943
- CN-A- 1 572 734
- CN-A- 106 348 576
- CN-A- 106 348 576
- CN-U- 206 173 209
- CN-U- 206 173 209
- JP-A- 2005 015 326
- US-A- 4 773 925
- US-B1- 6 192 710

## Description

### TECHNICAL FIELD

The present disclosure relates to the technical field of tempered glass production, in particular to a production device and a method for bent and tempered glass.

### BACKGROUND

At present, there are three main methods for producing single curved tempered glass: a synchronous bending method, an asynchronous bending method, and a sequential forming method. When producing single curved tempered glass with a height greater than 5000mm using synchronous bending method, the front end of the glass will have a blast defect and even burst. The asynchronous bending method can be used when producing single curved tempered glass with a height not greater than 5000mm, the defect of ruptured glass front end can be avoided, however, the overall forming is difficult, even causing burst. The sequential forming method can be well applied when producing single curved tempered glass with a height not greater than 5000mm, but the device needs to increase the forming section, the cost is larger, and the device occupies more production space.

CN106348576A and CN206173209U relate to a device and method for producting single-curved surface tempered glass. A moulding roller table group including n roller tables is set into a premoulding shape on a straight plane; the bending curvatures of the n roller tables are sequentially arranged in an ascending order; the bending curvatures of the premoulding shapes of the n roller tables are not greater than the bending curvature of the given moulding shape of to-be-bent glass; the n roller tables all can be bent into the given moulding shape; in other words, the front part of the glass with relatively obvious temperature drop is pre-moulded when the transfer process is finished, and thus the possibility of bursting open and even bursting crack of the glass is reduced, particularly at the front part of the glass; and the front part of the glass experiences little temperature drop, and thus conditions are provided for producing bent tempered glass with relatively great arc length, for example, the bent tempered glass with arc length of greater than 4,500mm can be produced.

US4773925A describes an adjustable roll forming arrangement for shaping heat softened glass sheets. Each end of a series of transversely curved, longitudinally spaced forming rolls are mounted on first and second longitudinally extending flexible members. The members may be adjusted so that each roll end is positioned along a desired longitudinal radius of curvature that can be modified by flexing the flexible member.

According to the above analysis of existing production methods of single curved tempered glass, the current methods have the contradictions in solving following problems: rupture of glass front end, forming defects, device cost and production space occupied, these problems cannot be easily compromised. There is a need for a production method for producing single curved tempered glass that can solve the problems in quality defects causing front end rupture and in forming of the product of the single curved tempered glass; the method should be low in cost and save production space at the same time.

### SUMMARY OF THE INVENTION

The object of the present disclosure is to solve the problems existing in current production technology of single curved tempered glass, and to reveal a new production device and production method for producing single curved tempered glass, with which the problem of defects causing the front end rupture, and the problem of forming of the product of the single curved tempered glass, can be solved, at the same time the cost is low, and the production space can be saved.

The invention is defined by the features of the independent claim.

The technical solution adopted by the present disclosure is:
It is also disclosed a production device for single curved tempered glass, sequentially comprising a heating section and a forming section in accordance with a process sequence: the heating section is provided with a ceramic roller table set and the forming section is provided with a forming roller table set, wherein their technical features are:
The forming roller table set comprises two portions: an upstream portion close to the heating section and a downstream portion farther away from the heating section;
The upstream portion comprises n roller tables, which are respectively marked as the 1^{st}, 2^{nd}, 3^{rd}, ..., n-1^{st}, n^{th} roller tables according to each roller table's distance to the heating section from near to distant; the downstream section comprises m roller tables, which are respectively marked as the 1^{st}, 2^{nd}, 3^{rd}, ..., m-1^{st}, m^{th} roller tables according to each roller table's distance from the heating section from near to distant; each roller table can be bent from an initial state to a final state;
The initial state of the 1^{st} roller table in the upstream portion is straight and is parallel with ceramic roller tables in the ceramic roller table set of the heating section, and the initial state of the n^{th} roller table in the upstream portion is bent so that an upper generatrix of the n^{th} roller table has fitted, or has not yet fitted, a shape of a lower surface of a product of the single curved tempered glass. the initial state of the 2^{nd}, 3^{rd}, ..., n-1^{st} roller tables in the upstream portion increases respectively gradually from the initial state of the 1^{st} roller table to the initial n^{th} roller table in the upstream portion. The initial states of the 1^{st}, 2^{nd}, 3^{rd}, ..., m-1^{st}, m^{th} roller tables in the downstream portion are the same as the initial state of the n^{th} roller table in the upstream portion; the final states of the 1^{st}, 2^{nd}, 3^{rd}, ......, n-1^{st}, n^{th} roller tables in the upstream portion, and the final states of the 1^{st}, 2^{nd}, 3^{rd}, ..., m-1^{th}, m^{th} roller tables in the downstream portion, are all bent so that an upper generatrix of each roller table has fitted the shape of the lower surface of the product of single curved tempered glass.

Said production device for producing single curved tempered glass, wherein a length of said upstream portion is not greater than 8000 mm.

Said production device for producing single curved tempered glass, wherein the number m of the m roller tables in the downstream portion is 0, that is, the forming roller table set does not comprises the downstream portion, and only comprises the upstream portion.

Said production device for producing single curved tempered glass, wherein the product of said single curved tempered glass is a part of a cylindrical surface , wherein a radius of an outer circular surface in the cylindrical surface is R. The initial state of the n^{th} roller table of said upstream portion, and the initial states of the 1^{st}, 2^{nd}, 3^{rd}, ..., m-1^{st}, m^{th} roller tables are all bent so that an upper generatrix of each roller table is in a shape of an arc with a radius of r; the final states of the 1^{st}, 2^{nd}, 3^{rd}, ... ..., n-1^{st}, n^{th} roller tables in said upstream portion, and the final states of the 1^{st}, 2^{nd}, 3^{rd}, ..., m-1^{st}, m^{th} roller tables in the downstream portion are all bent so that an upper generatrix of each roller table is in a shape of an arc with a radius of R; r is not smaller than R.

The invention relates to a production method for producing single curved tempered glass, wherein the method applying afore mentioned production device for producing single curved tempered glass for a positive bending production or a reverse bending production are adopted, wherein following steps are comprised:
Step 1) heating: that is, a glass is heated in the heating section to a temperature required by a glass bending and tempering process, and is softened;
Step 2) transferring: that is, the glass softened after heating, under a jointly conveyance by the ceramic roller table set of the heating section and the forming roller table set of the forming section, enters the forming section, in which each roller table in the upstream portion and the downstream portion is in its initial state. At the same time, under the action of gravity or other external force, the glass softened after heating is closely appressed to the upper generatrix of each roller table in the upstream portion and the downstream portion, and the glass softened after heating is pre-formed accordingly;
Step 3) bending: that is, each roller table in the upstream portion and the downstream portion is bent from its initial state to its final state, and the glass softened after heating is closely appressed to an upper generatrix of each of the roller tables in the upstream portion and the downstream portion under an action of gravity or other external force, and the glass softened after heating being formed;
Step 4) cold quenching: that is, cold quenching by blowing air until the glass is fully formed and is tempered so as to obtain a product of single curved tempered glass, whereby the production device for producing single curved tempered glass sequentially comprises a heating section (I) and a forming section (II) in accordance with a process sequence, wherein the heating section (I) is provided with a ceramic roller table set (1), and the forming section (II) is provided with a forming roller table set (3), wherein: said forming roller table set (3) comprises an upstream portion (i) close to the heating section (I), and a downstream portion (ii) farther away from the heating section (I); said upstream portion (i) comprises n roller tables, which are respectively marked as the 1st, 2nd, 3rd, ..., n-1st, and nth roller tables according to a distance from the heating section (I) from near to distant; the downstream section comprises m roller tables, which are respectively marked as the 1st, 2nd, 3rd, ..., m-1st, and mth roller tables according to a distance from the heating section (I) from near to distant; each roller table can be bent from an initial state to the final state; the number m of the m roller tables in the downstream portion is greater than or equal to 1; the initial state of the 1st roller table in the upstream portion (i) is straight and is parallel with ceramic roller tables in the ceramic roller table set (1) of the heating section, and the initial state of the nth roller table in the upstream portion (i) is bent so that an upper generatrix of the nth roller table has fitted, or has not yet fitted, a shape of a lower surface of a product of the single curved tempered glass; the initial states of the 2nd, 3rd, ..., and n-1st roller tables in the upstream portion (i) are respectively gradually transited from the initial state of the 1st roller table in the upstream portion (i) to the nth roller table in the upstream portion(i); the initial states of the 1st, 2nd, 3rd, ..., m- 1st, and mth roller tables in the downstream portion (ii) are all the same as the initial state of the nth roller table in the upstream portion (i); the final states of the 1st, 2nd, 3rd, ..., n-1st, and nth roller tables in the upstream portions (i) and the final states of the 1st, 2nd, 3rd, ..., m-1st, and mth roller tables are all bent so that an upper generatrix of each roller table has fitted the shape of the lower surface of the product of the single curved tempered glass; a length of the upstream portion (i) is not greater than 8000 mm; and the product of the single curved tempered glass is a part of a cylindrical surface, wherein a radius of an outer circular surface in the cylindrical surface is R; the initial state of the nth roller table in the upstream portion (i), and the initial states of the 1st, 2nd, 3rd, ..., m-1st, and mth roller tables in the downstream portion (ii) are all bent so that an upper generatrix of each roller table is in a shape of an arc with a radius of r; the final states of the 1st, 2nd, 3rd, ..., n-1st, nth roller tables in the upstream portion (i), and the final states of the 1st, 2nd, 3rd, ..., m-1st, mth roller tables in the downstream portion (ii), are all bent so that an upper generatrix of each roller table is in a shape of an arc with a radius of R; r is not smaller than R.

The beneficial effects of the present disclosure are that the production device and the production method of the single curved tempered glass are disclosed, the problem of the quality defects of the front end rupture and that in the forming of the product of the single curved tempered glass is solved, the cost is low, and the production space is saved.

### BRIEF DESCRIPTION OF THE DRAWINGS

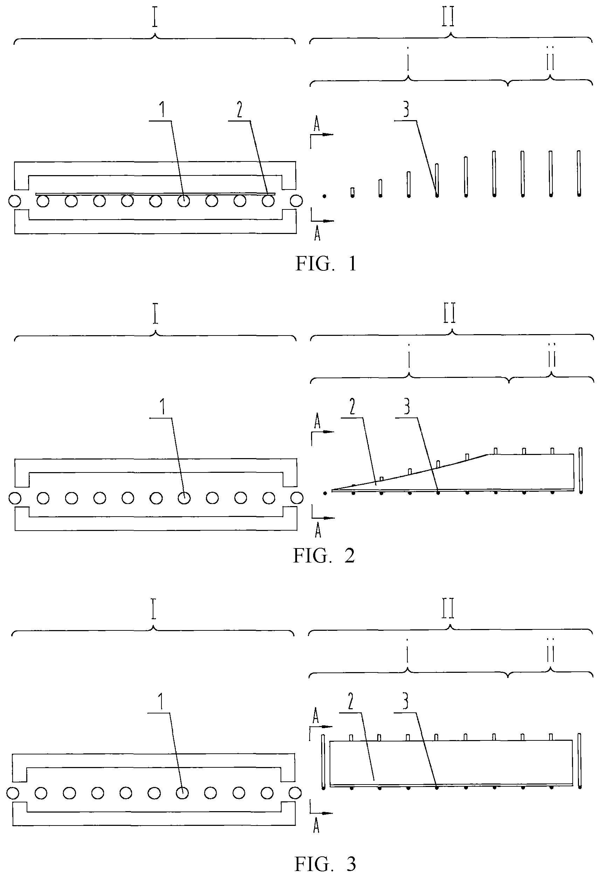

FIG. 1 is a schematic structural view of a device of the first embodiment of the present disclosure;
FIG. 2 is a schematic view showing the state of completion of transfer process of the device of the first embodiment of the present disclosure;
FIG. 3 is a schematic view showing a state in which a bending process of the device of the first embodiment of the present disclosure is completed;
FIG. 4 is a cross sectional A-A view of FIG. 1;
FIG. 5 is a cross sectional A-A view of FIG. 2;
FIG. 6 is a cross sectional A-A view of FIG. 3;

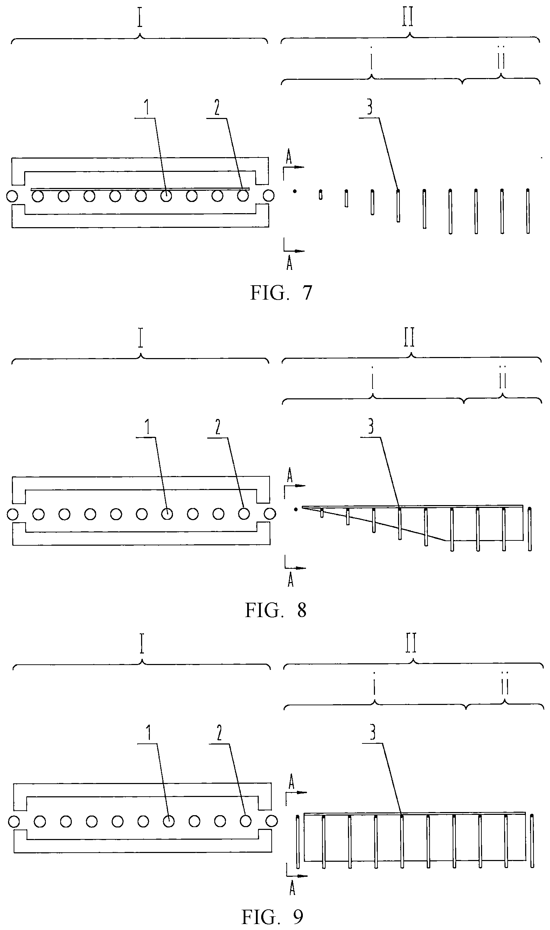

FIG. 7 is a schematic structural view of a device of the second embodiment of the present disclosure;
FIG. 8 is a schematic diagram showing the completed state of transfer process of device of the second embodiment according to the present disclosure;
FIG. 9 is a schematic diagram showing the completed state of bending process of device of the second embodiment according to the present disclosure;

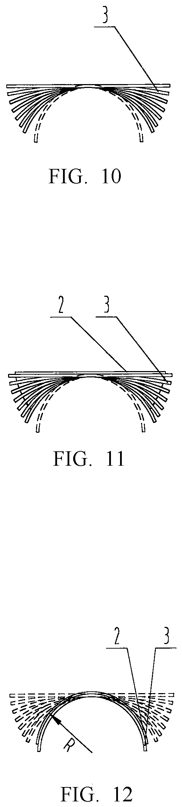

FIG. 10 is a cross sectional A-A view of FIG. 7;
FIG. 11 is a cross sectional A-A view of FIG. 8;
FIG. 12 is a cross sectional A-A view of FIG. 9;

Description of reference numerals: I-heating section, II-forming section; i-upstream section, ii-downstream section; 1-ceramic roller table set, 2-glass, 3-forming roller table set.

### DETAILED DESCRIPTION OF THE EMBODIMENTS

The present disclosure will be further described below in combination with specific embodiments.

### [The first embodiment]

As shown in FIG.s 1, 2, 3, 4, 5, and 6. The method for producing single curved tempered glass is carried out using production device for producing a positive bending single curved tempered glass. The production device sequentially comprising a heating section I and a forming section II in accordance with a process sequence, wherein the heating section I is equipped with a ceramic roller table set 1, and the forming section II is equipped with a forming roller table set 3.

Said forming roller table set 3 comprises two portions: an upstream portion i close to the heating section I and a downstream portion ii away from the heating section I;

Said upstream portion i comprises n roller tables, which are respectively marked as the 1^{st}, 2^{nd}, 3^{rd}, ..., n-1^{st}, n^{th} roller tables according to each roller table's distance from the heating section I from near to distant; the downstream portion ii comprises m roller tables, which are respectively marked as the 1^{st}, 2^{nd}, 3^{rd}, ..., m-1^{st}, m^{th} roller tables according to each roller table's distance from the heating section I from near to distant; each roller table can be bent from an initial state to a final state;

The initial state of the 1^{st} roller table in the upstream portion i is straight and is parallel with ceramic roller tables in the ceramic roller table set 1 of the heating section I, and the initial state of the n^{th} roller table in the upstream portion i is bent so that an upper generatrix of the n^{th} roller table has fitted, or has not yet fitted, a shape of a lower surface of a product of the single curved tempered glass; the initial states of the 2^{nd}, 3^{rd}, ..., n-1^{st} roller tables in the upstream portion i are respectively gradually changed from the initial state of the 1^{st} roller table to the n^{th} roller table in the upstream portion; the initial states of the 1^{st}, 2^{nd}, 3^{rd}, ..., m-1^{st}, m^{th} roller tables in the downstream portion ii are the same as the initial state of the n^{th} roller table in the upstream portion i. The final states of the 1^{st}, 2^{nd}, 3^{rd}, ..., n-1^{st} and n^{th} roller tables and the final states of the 1^{st}, 2^{nd}, 3^{rd}, ..., m-1^{st} and m^{th} roller tables in the downstream portion ii are all bent so that an upper generatrix of each roller table has fitted the shape of the lower surface of the product of the single curved tempered glass;

The production method for producing single curved tempered glass comprising following steps:
Step 1) a heating process: that is, the glass 2 to be processed is heated in the heating section I to a temperature required by a glass bending and tempering process, and is softened;
Step 2) a transferring process: that is, the glass 2 softened after heating, under a jointly conveyance by the ceramic roller table set 1 of the heating section I and the forming roller table set 3 of the forming section II, enters the forming section II, in which each roller table in the upstream portion i and the downstream portion ii in its initial state; At the same time, the softened glass is closely appressed to an upper generatrix of each roller table in the upstream portion and the downstream portion under an action of gravity or other external force, and is pre-formed accordingly;
Step 3) a bending process: that is, each of the roller tables in said upstream portion i and the downstream portion ii is bent from its initial state to its final state, and the glass 2 softened after heating is closely appressed to the upstream portion i and the downstream portion ii under an action of gravity or other external force, and the glass softened after heating is formed accordingly;
Step 4) a cold quenching process: that is, cold quenching by blowing air, until the glass 2 is fully formed and is tempered, so as to obtain a product of single curved tempered glass.

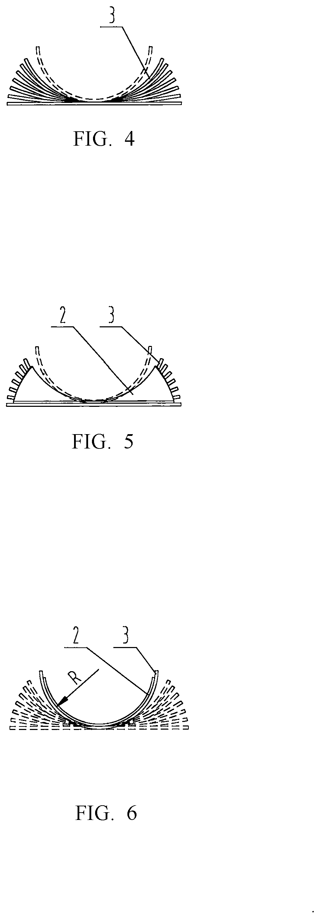

It should be noted in the drawings that the broken lines in Figs. 4 and 5 illustrate the final state of each of the forming roller table sets 3; the broken lines in FIG. 6 illustrate the initial state of each of the roller table in forming roller table sets 3.

Said method for producing single curved tempered glass, wherein a length of the upstream portion i is not greater than 8000 mm.

A special embodiment of said production method of the single curved tempered glass: the number m of the m roller tables in the downstream portion ii is 0, that is, the forming roller table set 3 does not comprises the downstream portion ii, and only comprises the upstream portion i.

A special embodiment of said production method of the single curved tempered glass: if the product of the produced single curved tempered glass is a part of the cylindrical surface, wherein a radius of an outer circular surface in the cylindrical surface is R, then

The initial state of the n^{th} roller table in said upstream portion i, and the initial states of the 1^{st}, 2^{nd}, 3^{rd}, ..., m-1^{st}, and m^{th} roller tables in the downstream portion ii are all bent so that an upper generatrix of each roller table is in a shape of an arc with a radius of r; The final states of the 1^{st}, 2^{nd}, 3^{rd}, ..., n-1^{st}, and n^{th} roller tables in the upstream portion i, and the final states of 1^{st}, 2^{nd}, 3^{rd}, ..., m-1^{st}, and m^{th} roller tables in the downstream portion ii, are all bent so that an upper generatrix of each roller table is in a shape of an arc with a radius of R, r is not smaller than R.

### [The second embodiment]

As shown in FIG.s 7, 8, 9, 10, 11, and 12. The invention discloses a reverse bending production method of single curved tempered glass with a production device of single curved tempered glass.

The difference from the first embodiment is that the two ends of the roller tables in the forming roller table set 3 are bent downwards, and the rest are the same as or similar to those in the first embodiment, and are not described herein.

## Claims

1. A production method for producing single curved tempered glass, applying a production device for producing single curved tempered glass, for a positive bending production or a reverse bending production, wherein the production method comprising following steps:
step 1) heating: that is, a glass (2) is heated in the heating section (I) to a temperature required by a glass bending and tempering process, and is softened;
step 2) transferring: that is, under a jointly conveyance by the ceramic roller table set (1) of the heating section (I) and the forming roller tables of the forming section (II), enter the forming section (II), in which each roller table in the upstream portion (i) and the downstream portion (ii) is in its initial state ; At the same time, under an action of gravity or other external force, the glass (2) softened after heating is closely appressed to an upper generatrix of each roller table in the upstream portion (i) and the downstream portion (ii), and the glass (2) softened after heating is preformed accordingly;
step 3) bending: that is, each roller table in the upstream portion (i) and the downstream portion (ii) is bent from its initial state to its final state; the glass (2) softened after heating is closely appressed to the upper generatrix of each roller table in the upstream portion (i) and the downstream portion (ii) under an action of gravity or other external force, and the glass softened after heating is formed;
step 4) cold quenching: that is, cold quenching by blowing air until the glass (2) is fully formed and is tempered so as to obtain a product of single curved tempered glass, whereby
the production device for producing single curved tempered glass sequentially comprises a heating section (I) and a forming section (II) in accordance with a process sequence, wherein the heating section (I) is provided with a ceramic roller table set (1), and the forming section (II) is provided with a forming roller table set (3), wherein:
said forming roller table set (3) comprises an upstream portion (i) close to the heating section (I), and a downstream portion (ii) farther away from the heating section (I);
said upstream portion (i) comprises n roller tables, which are respectively marked as the 1^{st}, 2^{nd}, 3^{rd}, ..., n-1^{st}, and n^{th} roller tables according to a distance from the heating section (I) from near to distant; the downstream section comprises m roller tables, which are respectively marked as the 1^{st}, 2^{nd}, 3^{rd}, ..., m-1^{st}, and m^{th} roller tables according to a distance from the heating section (I) from near to distant; each roller table can be bent from an initial state to the final state;
the number m of the m roller tables in the downstream portion is greater than or equal to 1;
the initial state of the 1^{st} roller table in the upstream portion (i) is straight and is parallel with ceramic roller tables in the ceramic roller table set (1) of the heating section, and the initial state of the n^{th} roller table in the upstream portion (i) is bent so that an upper generatrix of the n^{th} roller table has fitted, or has not yet fitted, a shape of a lower surface of a product of the single curved tempered glass; the initial states of the 2^{nd}, 3^{rd}, ..., and n-1^{st} roller tables in the upstream portion (i) are respectively gradually transited from the initial state of the 1^{st} roller table in the upstream portion (i) to the n^{th} roller table in the upstream portion(i); the initial states of the 1^{st}, 2^{nd}, 3^{rd}, ..., m-1^{st}, and m^{th} roller tables in the downstream portion (ii) are all the same as the initial state of the n^{th} roller table in the upstream portion (i); the final states of the 1^{st}, 2^{nd}, 3^{rd}, ..., n-1^{st}, and n^{th} roller tables in the upstream portions (i) and the final states of the 1^{st}, 2^{nd}, 3^{rd}, ..., m-1^{st}, and m^{th} roller tables are all bent so that an upper generatrix of each roller table has fitted the shape of the lower surface of the product of the single curved tempered glass;
a length of the upstream portion (i) is not greater than 8000 mm; and
the product of the single curved tempered glass is a part of a cylindrical surface, wherein a radius of an outer circular surface in the cylindrical surface is R; the initial state of the n^{th} roller table in the upstream portion (i), and the initial states of the 1^{st}, 2^{nd}, 3^{rd}, ..., m-1^{st}, and m^{th} roller tables in the downstream portion (ii) are all bent so that an upper generatrix of each roller table is in a shape of an arc with a radius of r; the final states of the 1^{st}, 2^{nd}, 3^{rd}, ..., n-1^{st}, n^{th} roller tables in the upstream portion (i), and the final states of the 1^{st}, 2^{nd}, 3^{rd}, ..., m-1^{st}, m^{th} roller tables in the downstream portion (ii), are all bent so that an upper generatrix of each roller table is in a shape of an arc with a radius of R; r is not smaller than R.

## Patentansprüche

1. Verfahren zum Herstellen von einfach gebogenem Temperglas unter Verwendung einer Vorrichtung zum Herstellen von einfach gebogenem, gehärteten Glas für eine positive Biegung oder eine negative Biegung, wobei das Verfahren die folgenden Schritte aufweist:
Schritt 1) Erwärmen: d.h. ein Glas (2) wird in einem Heizabschnitt (I) auf eine für den Glasbiege- und Temperprozess erforderliche Temperatur erwärmt und erweicht;
Schritt 2) Überführen: d.h., unter gemeinsamer Förderung durch einen Keramikrollentischsatz (1) des Heizabschnitts (I) und die Formungsrollentische des Formungsabschnitts (II) tritt das Glas in den Formungsabschnitt (II) ein, in dem sich jeder Rollentisch im stromaufwärtsseitigen Abschnitt (i) und im stromabwärtsseitigen Abschnitt (ii) in seinem Ausgangszustand befindet; gleichzeitig wird das nach dem Erwärmen erweichte Glas (2) unter Wirkung der Schwerkraft oder einer anderen äußeren Kraft eng an eine obere Mantellinie jedes Rollentisches im stromaufwärtsseitigen Abschnitt (i) und im stromabwärtsseitigen Abschnitt (ii) gedrückt, und das nach dem Erwärmen erweichte Glas (2) wird entsprechend vorgeformt;
Schritt 3) Biegen: d. h., jeder Rollentisch im stromaufwärtsseitigen Abschnitt (i) und im stromabwärtsseitigen Abschnitt (ii) wird von seinem Ausgangszustand in seinen Endzustand gebogen; das nach dem Erwärmen erweichte Glas (2) wird unter Wirkung der Schwerkraft oder einer anderen äußeren Kraft eng an die obere Mantellinie jedes Rollentisches im stromaufwärtsseitigen Abschnitt (i) und im stromabwärtsseitigen Abschnitt (ii) gedrückt, und das nach dem Erwärmen erweichte Glas wird geformt;
Schritt 4) Kaltabschrecken: d. h. Kaltabschrecken durch Einblasen von Luft, bis das Glas (2) vollständig geformt und gehärtet ist, um ein Produkt eines einfach gebogenen Temperglases zu erhalten, wobei
die Vorrichtung zum Herstellen von einfach gebogenem Temperglas nacheinander einen Heizabschnitt (I) und einen Formungsabschnitt (II) gemäß einem Prozessablauf aufweist, wobei der Heizabschnitt (I) einen Keramikrollentischsatz (1) aufweist und der Formungsabschnitt (II) einen Formungsrollentischsatz (3) aufweist, wobei:
der Formungsrollentischsatz (3) einen stromaufwärtsseitigen Abschnitt (i) in der Nähe des Heizabschnitts (I) und einen stromabwärtsseitigen Abschnitt (ii) weiter entfernt vom Heizabschnitt (I) aufweist,
der stromaufwärtsseitige Abschnitt (i) n Rollentische aufweist, die jeweils entsprechend einem Abstand vom Heizabschnitt (I) von nah bis entfernt als 1., 2., 3., n-1-ter und n-ter Rollentisch bezeichnet sind, der stromabwärtsseitige Abschnitt m Rollentische aufweist, die entsprechend ihrem Abstand vom Heizabschnitt (I) von nah bis entfernt als 1., 2., 3., ... m-1-ter und m-ter Rollentisch bezeichnet sind, wobei jeder Rollentisch von einem Ausgangszustand in den Endzustand gebogen werden kann,
die Anzahl m der m Rollentische im stromabwärtsseitigen Abschnitt größer oder gleich 1 ist,
der Anfangszustand des 1. Rollentischs im stromaufwärtsseitigen Abschnitt (i) gerade ist und sich parallel zu den Keramikrollentischen im Keramikrollentischsatz (1) des Heizabschnitts erstreckt, und der Anfangszustand des n-ten Rollentischs im stromaufwärtsseitigen Abschnitt (i) derart gebogen ist, dass eine obere Mantellinie des n-ten Rollentischs an eine Form einer Unterseite eines Produkts des einfach gebogenen Temperglases angepasst ist oder noch nicht angepasst ist, die Anfangszustände des 2., 3., ..., und n-1-ten Rollentischs im stromaufwärtsseitigen Abschnitt (i) jeweils allmählich vom Anfangszustand des 1. Rollentischs im stromaufwärtsseitigen Abschnitt (i) zum n-ten Rollentisch im stromaufwärtsseitigen Abschnitt (i) übergehen, die Anfangszustände des 1., 2., 3., ..., m-1-ten und m-ten Rollentischs im stromabwärtsseitigen Abschnitt (ii) alle dem Anfangszustand des n-ten Rollentischs im stromaufwärtsseitigen Abschnitt (i) gleichen, die Endzustände des 1., 2., 3., ... n-1-ten und n-ten Rollentischs in den stromaufwärtsseitigen Abschnitten (i) und die Endzustände des 1., 2., 3., ..., m-1-ten und m-ten Rollentischs alle derart gebogen sind, dass eine obere Mantellinie jedes Rollentischs an die Form der Unterseite des Produkts des einfach gebogenen Temperglases angepasst ist,
eine Länge des stromaufwärtsseitigen Abschnitts (i) nicht mehr als 8000 mm beträgt, und
das Produkt des einfach gebogenen Temperglases Teil einer zylindrischen Oberfläche ist, wobei der Radius einer äußeren Kreisfläche in der zylindrischen Oberfläche R ist, der Ausgangszustand des n-ten Rollentischs im stromaufwärtsseitigen Abschnitt (i) und die Ausgangszustände des 1., 2., 3., ..., m-1-ten und m-ten Rollentischs im stromabwärtssetigen Abschnitt (ii) alle derart gebogen sind, dass eine obere Mantellinie jedes Rollentischs die Form eines Bogens mit einem Radius r hat, die Endzustände des 1., 2., 3. ..., n-1-ten und n-ten Rollentischs im stromaufwärtsseitigen Abschnitt (i) und die Endzustände des 1., 2., 3., ..., m-1-ten und m-ten Rollentischs im stromabwärtsseitigen Abschnitt (ii) alle derart gebogen sind, dass eine obere Mantellinie jedes Rollentischs eine Bogenform mit einem Radius R aufweist, wobei r nicht kleiner als R ist.

## Revendications

1. Procédé de production de verre trempé à simple courbure, mettant en œuvre un dispositif de production de verre trempé à simple courbure, pour une production en courbure positive ou une production en courbure inverse, le procédé de production comprenant les étapes suivantes :
étape 1) chauffage : c'est-à-dire un verre (2) est chauffé dans une section de chauffage (I) jusqu'à une température nécessaire pour une courbure du verre et un processus de trempe, et est ramolli ;
étape 2) transfert : c'est-à-dire, sous l'effet d'un transport combiné par l'ensemble de table à rouleaux en céramique (1) de la section de chauffage (I) et de table à rouleaux de formage de la section de formage (II), pénètre dans la section de formage (II), dans laquelle chaque table à rouleaux de formage dans la partie en amont (i) et dans la partie en aval (ii) est dans son état initial ; en même temps, sous l'action de la gravité ou d'une autre force externe, le verre (2) ramolli après le chauffage est pressé étroitement contre une génératrice supérieure de chaque table à rouleaux dans la partie en amont (i) et la partie en aval (ii), et le verre (2) ramolli après le chauffage est préformé de manière adéquate ;
étape 3) courbure : c'est-à-dire, chaque table à rouleaux dans la partie en amont (i) et la partie en aval (ii) est courbée à partir de son état initial vers son état final ; le verre (2) ramolli après le chauffage est pressé étroitement contre une génératrice supérieure de chaque table à rouleaux dans la partie en amont (i) et la partie en aval (ii) sous l'action de la gravité ou d'une autre force externe, et le verre ramolli après le chauffage est formé ;
étape 4) trempe à froid : c'est-à-dire, une trempe à froid en soufflant de l'air jusqu'à ce que le verre (2) soit totalement formé et soit trempé de sorte à obtenir un produit de verre trempé à simple courbure, ce par quoi
le dispositif de production pour produire du verre trempé à simple courbure de manière séquentielle comprend une section de chauffage (I) et une section de formage (II) conformément à une séquence du processus, où la section de chauffage (I) est pourvue d'un ensemble de table à rouleaux en céramique (1) et la section de formage (II) est pourvue d'un ensemble de table à rouleaux de formage (3), dans lequel :
ledit ensemble de table à rouleaux de formage (3) comprend une partie en amont (i) proche de la section de chauffage (I) et une partie en aval (ii) située plus loin par rapport à la section de chauffage (I) ;
ladite partie en amont (i) comprend n tables à rouleaux qui sont respectivement repérées comme la 1^{ère}, la 2^{ème}, la 3^{ème}, ..., la n - 1^{ème} et la n^{ième} table à rouleaux en fonction d'une distance par rapport à la section de chauffage (I), de la plus proche à la plus éloignée ; chaque table à rouleaux peut être courbée à partir d'un état initial vers un état final ;
le nombre m de tables à rouleaux dans la partie en aval est supérieur ou égal à 1 ;
l'état initial de la 1^{ère} table à rouleaux dans la partie en amont (i) est rectiligne et est parallèle avec les tables à rouleaux en céramique dans l'ensemble de table à rouleaux en céramique (1) de la section de chauffage, et l'état initial de la n^{ième} table à rouleaux dans la partie en amont (i) est courbé de sorte qu'une génératrice supérieure de la n^{ième} table à rouleaux a mis en place, ou n'a pas encore mis en place, une forme d'une surface inférieure d'un produit de verre trempé à simple courbure ; les états initiaux des 2^{ème}, 3^{ème}, ..., et n - 1^{ème} tables à rouleaux dans la partie en amont (i) sont respectivement graduellement en transition à partir de l'état initial de la 1^{ère} table à rouleaux dans la partie en amont (i) jusqu'à la n^{ième} table à rouleaux dans la partie en amont (i) ; les états initiaux des 1^{ère}, 2^{ème}, 3^{ème}, ..., m - 1^{ème} et m^{ieme} tables à rouleaux dans la partie en aval (ii) sont tous les mêmes que l'état initial de la n^{ième} table à rouleaux dans la partie en amont (i) ; les états finaux des 1^{ère}, 2^{ème}, 3^{ème}, ..., n - 1^{ème} et n^{ième} tables à rouleaux dans les parties en amont (i) et les états finaux des 1^{ère}, 2^{ème}, 3^{ème}, ..., m - 1^{ème} et m^{ième} tables à rouleaux sont tous courbés de sorte qu'une génératrice supérieure de chaque table à rouleaux a mis en place la forme de la surface inférieure du produit de verre trempé à simple courbure ;
une longueur de la partie en amont (i) n'est pas supérieure à 8000 mm ; et
le produit de verre trempé à courbure simple est une partie d'une surface cylindrique, où un rayon d'une surface circulaire extérieure dans la surface cylindrique est R ; l'état initial de la n^{ième} table à rouleaux dans la partie en amont (i) et les états initiaux des 1^{ère}, 2^{ème}, 3^{ème}, ..., m - 1^{ème} et m^{ième} tables à rouleaux dans la partie en aval (ii) sont tous courbés de sorte qu'une génératrice supérieure de chaque table à rouleaux est dans une forme avec un arc de rayon r ; les états finaux des 1^{ère}, 2^{ème}, 3^{ème}, ..., n - 1^{ème} et n^{ième} tables à rouleaux dans la partie en amont (i) et les états finaux des 1^{ère}, 2^{ème}, 3^{ème}, ..., m - 1^{ème} et m^{ième} tables à rouleaux dans la partie en aval (ii) sont tous courbés de sorte qu'une génératrice supérieure de chaque table à rouleaux est dans la forme d'un arc avec un rayon R ; r n'est pas plus petit que R.
